# EUROPÄISCHE PATENTANMELDUNG

(11) **EP 2 340 715 A2**
(43) Veröffentlichungstag der Anmeldung: **06.07.2011**
(21) Anmeldenummer: 10405245.1
(22) Anmeldetag: 23.12.2010
(51) Int. Cl.: A21D 2/04, A21D 2/22, A21D 8/02, A21D 13/00, A21C 1/08, A21C 1/10, A21C 1/14, A21C 3/02

(54) **Verfahren zur Herstellung eines Teigs**

(30) Priorität: 05.01.2010 CH 62010
(71) Anmelder: Rondo Burgdorf AG, 3400 Burgdorf (CH)
(72) Erfinder: Weissbach, Alexander, 4552 Derendingen (CH); Lösche, Klaus, 27580 Bremerhaven (DE); von Bargen, Markus, 27574 Bremerhaven (DE)
(74) Vertreter: Rüfenacht, Philipp Michael

(57) **Zusammenfassung**

Die Erfindung betrifft ein Verfahren zur Herstellung eines Teigs und zu dessen Bearbeitung, wobei im Rahmen eines Knetprozesses Mehl, mit Sauerstoff angereichertes Schüttwasser und nach Bedarf weitere Zutaten zu einer formbaren Teigmasse verarbeitet werden. Nach dem Knetprozess wird die Teigmasse zu einem Teigband ausgewalzt, wobei beim Auswalzen ein durch den Sauerstoffgehalt des Schüttwassers bedingte Zunahme einer Plastizität des Teigs zur schnelleren Teigbandherstellung genutzt wird.

## Beschreibung

### Technisches Gebiet

Die Erfindung betrifft ein Verfahren zur Herstellung eines Teigs und zu dessen Bearbeitung, wobei im Rahmen eines Knetprozesses Mehl, mit Sauerstoff angereichertes Schüttwasser und nach Bedarf weitere Zutaten zu einem formbaren Teig verarbeitet werden.

### Stand der Technik

Die Automatisierung und Perfektionierung der Verarbeitung von Teig zwecks Bereitstellung von möglichst backfertigen Teigprodukten ist seit langem ein Bedürfnis und wird mit entsprechendem Aufwand verfolgt. In der Vergangenheit wurden deshalb immer wieder neue Produktionsmaschinen entwickelt, die die Qualität und Geschwindigkeit der Verarbeitung des ungeformten Teigs zu den gewünschten Teigprodukten verbessern.

Zur Illustration der verschiedenen Möglichkeiten, wie ein gekneteter Teig in ein Teigband verarbeitet werden kann, wird beispielhaft auf die EP 1 203 533 B1 (Seewer) verwiesen. Die Vorrichtung zum Walzen eines Teigbands umfasst eine Transportvorrichtung und eine Walzenanordnung, wobei die gegenseitige Lage der Transportvorrichtung und der Walzenanordnung in zumindest zwei verschiedene Raumrichtungen variierbar ist. Dadurch können sowohl die Dicke des Teigbands als auch die Strecke, innerhalb welcher die Teigmasse zum Teigband gewalzt wird, verstellt werden. Dies erlaubt eine Optimierung der Vorrichtung für die Herstellung von Teigbändern aus verschiedenen Teigarten, welche verschiedene Eigenschaften aufweisen. Die Teigbandproduktion kann dadurch derart optimiert werden, dass möglichst wenige Spannungen im Teigband vorhanden sind.

Weitere Maschinen, um einen unförmigen Teig in die Form eines kontinuierlichen Teigbands einer Dicke von z.B. wenigen Millimetern zu bringen, sind beispielsweise aus den Dokumenten EP-A-0 179 645, EP 0 127 583 A2, EP-A-0 545 725, EP-A-0 657 101, WO-A-91/01643, WO-A-95/28087, DE-A-2 445 918, GB-A-1 166 454 oder EP 1 203 533 B1 bekannt.

Aus dem Teigband können nachher in verschiedenster Weise Teigprodukte abgetrennt werden (ES 2 168 220 B1, Lozano; EP 0 482 917 B1, Rheon; EP 0 382 105 B1, Fritsch). Zur Herstellung von Croissants beispielsweise werden aus dem Teigband dreieckige Teigstücke abgetrennt und danach (mit oder ohne Füllung) aufgerollt.

In der DE 20 2005 020 984 U1 (Neuenkirchener Maschinenfabrik Emil Kemper) wird vorgeschlagen, beim Kneten des Teigs über spezielle Sprühdüsen ein Gemisch aus flüssigen Teigkomponenten und Sauerstoff/Luft dem Knetbottich zuzuführen. Damit soll erreicht werden, dass in der Misch- und Knetanordnung die Teigbildung und Teigentwicklung verbessert und beschleunigt wird. Insbesondere in Kombination mit der L-Ascorbinsäure soll das Verkleben des Teigs gefördert werden.

Die Herstellung von laminierten Teigen (Blätterteig, Croissantteig und Plunderteig bzw. Hefefeinteig) zur Produktion von entsprechenden Bäckereiprodukten hat nach wie vor eine grosse Bedeutung. Es ist aber bis jetzt nicht gelungen, die Effizienz des Herstellungsprozesses substanziell zu steigern. Letztendlich ist der Teig ein Naturprodukt mit gewissen inhärenten Eigenschaften (wie z.B. Elastizität), die bei der Verarbeitung geeignet berücksichtigt werden müssen. Ansonsten können sich die Formen des Teigprodukts während des Ruhens und Backens in unkontrollierter Weise verändern. Unregelmässige Produkte finden im Markt aber keine Akzeptanz.

### Darstellung der Erfindung

Aufgabe der Erfindung ist es, ein dem eingangs genannten technischen Gebiet zugehörendes Verfahren zu schaffen, welches eine einfache und effiziente Herstellung sowie Bearbeitung eines Teigs erlaubt und zu qualitativ hochwertigen Backergebnissen führt.

Die Lösung der Aufgabe ist durch die Merkmale des Anspruchs 1 definiert. Gemäss der Erfindung wird der Teig nach dem Knetprozess zu einem Teigband ausgewalzt, wobei beim Auswalzen eine durch den im Knetprozess zugegebenen Sauerstoff bedingte Zunahme einer Plastizität des Teigs zur schnelleren Teigbandherstellung genutzt wird. Dies wird dadurch ermöglicht, dass die Zunahme der Plastizität rasch erfolgt, wobei die Elastizität des Teigs gleich bleibt. Durch die Zunahme der Plastizität können zudem bei der Teigbandherstellung grössere Abwalzverhältnisse erreicht werden, ohne dass das Teigband nach einem Walzvorgang die ursprüngliche Form wieder annimmt. Dies hat einerseits den Vorteil, dass das Teigband regelmässiger formbar ist und andererseits dass für die Teigbandherstellung weniger Walzvorgänge benötigt werden. Dementsprechend wird die Teigbandherstellung beschleunigt und eine Verkürzung der Produktionsanlage ermöglicht.

Nebst der beschleunigten Teigbandherstellung hat dieses Verfahren den Vorteil, dass durch die erhöhte Plastizität die Formgebung des Bandes erleichtert wird. Aufgrund von weniger Spannungen im Teigband führt dies zu weniger Unregelmässigkeiten im Teigband und einer entsprechend verbesserten Gewichtsgenauigkeit der Endprodukte und zu einer Reduktion der Menge an Produktionsabfällen. Für die Verarbeitung des Teigbandes hat die Sauerstoffzugabe den Vorteil, dass der Teig eine trockenere Haptik aufweist, sodass das Anhaften des Teigbands an den Maschinenkomponenten verringert wird, wodurch eine Reduktion der Streumehlmenge für das Aufarbeiten erzielt werden kann. Dies ist sowohl ökonomisch als auch ökologisch vorteilhaft. Zudem hat eine solche Reduktion der Streumehlmenge den Vorteil, dass für das Backstubenpersonal präventiv die gesundheitliche Gefahr von Bäckerasthma minimiert wird.

Die durch die Sauerstoffzugabe erreichte trockenere Haptik des Teigs hat den weiteren Vorteil, dass, falls dem Teig im Knetprozess Salz beigegeben wird, der Salzgehalt reduziert werden kann, ohne dass der Teig klebriger wird. Auch wird durch die Sauerstoffzugabe die Teigstruktur verbessert, wodurch generell die benötigte Menge an Backmitteln und/oder Salz reduziert wird und Produktionskosten eingespart werden können. Auch weist das Endprodukt durch die Sauerstoffzugabe mehr Geschmacksstoffe und ein grösseres Volumen auf. Weiterhin kann eine verlängerte Haltbarkeit und eine verbesserte Lagerstabilität von gefrosteten Produkten erzielt werden.

Die erfindungsgemässe Zugabe von Sauerstoff ist in ihrer Funktion und Wirkungsweise nicht zu vergleichen mit bisherigen Verfahren, welche bei der Herstellung eines Brotteigs (Sauerteig, normaler Hefeteig) während des Knetens Sauerstoff zugeben. Bei jenen bekannten Verfahren wird der Sauerstoff so zugegeben, dass er die Teigentwicklung und die Bildung der für einen luftigen Teig erforderlichen Blasen beeinflusst. Beispiele jener bekannter Verfahren zur Brotteigherstellung finden sich in DE 196 24 229 A1 (Werner & Pfleiderer), DE 20 2006 003 647 U1 (Oxicur-Medizin-Technik), CA 1,306,247 C (BOC Group plc) US 2004/0156968 A1 (G. Fisson et al) oder GB 2,264,623 A (APV Corporation Limited). Während beim genannten Stand der Technik der Sauerstoff bzw. dessen Menge auf die Wirkung der Hefe- bzw. Sauerteigbakterien abgestimmt ist, um das Aufgehen des Teiges zu fördern, ist bei der Erfindung die Wirkung bzw. Dosierung des Sauerstoffs im Hinblick auf eine optimale Plastizität (insbesondere erhöhte Plastizität im Vergleich zum Stand der Technik) gewählt.

Vorzugsweise wird der Sauerstoff durch mit Sauerstoff angereichertes Schüttwasser dem Teig im Knetprozess zugeführt. Dies hat den Vorteil, dass die Menge an Sauerstoff im Teig optimal kontrollierbar ist, da das gesamte Schüttwasser in den Teig verarbeitet wird. Zudem ist dadurch eine gleichmässige Verteilung des Sauerstoffs im Teig gewährleistet. Des Weiteren hat das mit Sauerstoff angereicherte Schüttwasser den Vorteil, dass die Gefahr einer Mehlstaubexplosion minimiert wird.

Um dieses Verfahren umzusetzen, wird eine Vorrichtung eingesetzt, welche eine Knetmaschine und eine Schüttwasserdosiervorrichtung umfasst, wobei eine Mess- und/oder Steuervorrichtung zur Kontrolle der Dosierung der Sauerstoffanreicherung im Schüttwasser vorgesehen ist. Dies ermöglicht eine Automatisierung des Ablaufs, wodurch der Betrieb der Vorrichtung wirtschaftlicher wird. Weiter hat dies den Vorteil, dass die Sauerstoffanreicherung des Schüttwassers derart optimierbar ist, dass die formbare Teigmasse eine optimale Plastizität für die Herstellung eines Teigbands aufweist. Diese optimale Plastizität kann dabei je nach Endprodukt und je nach benötigten Verarbeitungsschritten variieren bzw. an die jeweiligen Eigenschaften des Mehls angepasst werden. Die Mess- und/oder Steuervorrichtung zur Kontrolle der Dosierung der Sauerstoffanreicherung im Schüttwasser ermöglicht dabei eine Adaption an verschiedenste Endprodukte, was die Vorrichtung vielseitig einsetzbar macht.

Vorzugsweise wird im Rahmen des Knetprozesses zusätzlich Ascorbinsäure verarbeitet, wobei der Sauerstoff und die Ascorbinsäure in einer Menge zugegeben werden, welche die Plastizität des Teigs erhöht. Die Kombination von bewusst gewähltem Sauerstoffgehalt des Schüttwassers und bewusst gewählter Menge an zusätzlicher Ascorbinsäure hat den Vorteil, dass die Plastizität des Teigs besser steuerbar ist, als wenn nur der Sauerstoffgehalt des Schüttwassers zur Steuerung der Plastizität des Teigs verwendet wird. Zudem hat dies den Vorteil, dass eine schlechte Mehlqualität ausgeglichen werden kann. Alternativ dazu besteht jedoch auch die Möglichkeit, dass einzig der Sauerstoffgehalt des Schüttwassers optimiert wird. Dabei kann entweder eine nicht optimierte Menge an zusätzlicher Ascorbinsäure oder gar keine Ascorbinsäure beigegeben werden.

Bevorzugt werden durch Übereinanderschichten von Teig-Fett-Teig-Bändern oder Teig-Bändern laminierte Teige hergestellt. Dies hat den Vorteil, dass geschichtete Teige mit eingearbeiteten Fettlagen wie beispielsweise Blätterteige oder Plunderteige herstellbar sind. Das Verfahren ist für die Herstellung von laminierten Teigen besonders geeignet, da das Teigband wiederholt mit Tourierfett bestrichen, eingeschlagen, laminiert und wieder auf seine ursprüngliche Dicke gewalzt wird. Dabei ist eine optimale Plastizität des Teigbands für eine effiziente Produktion essenziell. Dementsprechend ermöglicht das Verfahren eine schnelle, kostengünstige Produktion.

Im vorliegenden Text werden Teige, welche für feine Backwaren ("Leitsätze für feine Bachwaren" vom GMBI. Nr. 8-10 S. 220 vom 20. Februar 2003) verwendet werden, als Feinteige bezeichnet.

Vorteilhafterweise werden mit dem Verfahren Feinteige und Pizzateige hergestellt. Aus solchen Feinteigen hergestellte feine Backwaren unterscheiden sich von Brot und Kleingebäck dadurch, dass ihr Gehalt an Fett und/oder Zuckerarten mehr als 10 Teile auf 90 Teile Getreide und/oder Getreideerzeugnisse und/oder Stärken beträgt (gemäss "Leitsätze für feine Bachwaren" vom GMBI. Nr. 8-10 S. 220 vom 20. Februar 2003). Auch Pizzateige, die einen hohen Anteil an pflanzlichem Öl enthalten, lassen sich durch das Verfahren leichter aufarbeiten.

Es ist in diesem Zusammenhang zu beachten, dass grundsätzlich bei fetthaltigen Teigen wie gewissen Feinteigen oder tourierten Teigen die Plastizität des Teigs durch das verwendete Fett erhöht wird. Dieser Effekt ist für eine hohe Qualität von solchen Produkten erforderlich. Das hier beschriebene Verfahren hat diesbezüglich den Vorteil, dass die Plastizität des Teigs bereits ohne Fett erhöht wird. Entsprechend können durch das Verfahren Backprodukte von hoher Qualität mit weniger Fett hergestellt werden.

Je nach herzustellendem Endprodukt ist Fett als Zutat jedoch unerwünscht. Daher besteht als Alternative auch die Möglichkeit, auf jegliche Fettzugabe zu verzichten.

Vorzugsweise ist die Teigmasse frei von Sauerteig. Eine Teigmasse mit Sauerteig muss nach dem Kneten der Teigentwicklung überlassen werden und kann daher nach dem Kneten nicht direkt verarbeitet werden. Daher ist eine Fliessbandproduktion, wie sie vom beschriebenen Verfahren angestrebt wird, für Sauerteige nicht sinnvoll. Auch Teigmassen mit Hefe benötigen eine gewisse Entwicklungszeit, welche das beschriebene Verfahren deutlich verlangsamt und welche je nach dem auch andere Verfahren zur Teigmassenbearbeitung, bei welchen nicht eine optimale Plastizität des Teigs ausschlaggebend ist, als geeigneter erscheinen lässt. Trotzdem besteht als Alternative die Möglichkeit, dass der Teigmasse Hefe beigegeben wird. Besonders bei Plunderteigen, zu deren Produktion wiederholt Walzvorgänge benötigt werden, ist das beschriebene Verfahren aufgrund der optimierten Teigplastizität dennoch vorteilhaft.

Vorteilhafterweise weist das Schüttwasser einen Sauerstoffgehalt von mindestens 100 ppm, vorzugsweise mindestens 150 ppm, mindestens 200 ppm, mindestens 250 ppm, insbesondere mindestens 300 ppm und vorzugsweise nicht mehr als 1000 ppm, insbesondere nicht mehr als 500 ppm, auf. Dies hat den Vorteil, dass die Plastizität des Teigs erhöht wird. Eine weitere, positive Eigenschaft des derart gewählten Sauerstoffgehalts des Schüttwassers ist, dass die Teigentwicklung verbessert und beschleunigt wird, da eine kombinierte Reaktion zwischen L-Ascorbinsäure und Sauerstoff ebenso wie eine parallele, aber unabhängig von L-Ascorbinsäure, Reaktion des Sauerstoffs mit dem Klebereiweiss des Weizens vorliegt. Dies ermöglicht eine schnellere Produktion, was die Produktionskosten senkt. Alternativ dazu besteht auch die Möglichkeit, das Schüttwasser mit weniger als 100 ppm Sauerstoff anzureichern.

Vorteilhafterweise wird eine Temperatur des Schüttwassers tief gehalten. Insbesondere wird die Temperatur des Schüttwassers vorzugsweise bei Raumtemperatur, vorzugsweise aber unter Raumtemperatur gehalten. Dadurch gast das Schüttwasser den angereicherten Sauerstoff nicht gleich wieder aus. Dies hat den Vorteil, dass die Sauerstoffbeigabe zum Teig besser kontrollierbar ist, da das angereicherte Schüttwasser den Sauerstoff nicht vor der Vermischung mit den anderen Teigzutaten bereits wieder abgibt, sondern erst an den Teig abgibt.

Vorzugsweise wird eine Bereitstellung des mit Sauerstoff angereicherten Schüttwassers durch eine kontinuierliche Sauerstoffanreicherung erreicht. Da das Wasser dadurch gleichmässig mit Sauerstoff angereichert ist, hat dies den Vorteil, dass während des Knetprozesses der zusätzliche Sauerstoff auf effiziente Art und Weise gleichmässig in der Teigmischung verteilt wird.

Alternativ dazu besteht jedoch auch die Möglichkeit, das Schüttwasser im sogenannten Batch-Betrieb anzureichern. So kann beispielsweise eine bestimmte, nicht variable Menge Wasser mit einer bestimmten, nicht variablen Menge Sauerstoff angereichert werden. Dieses sauerstoffangereicherte Wasser kann dann in einem zweiten Schritt in einem bestimmten Verhältnis zum Schüttwasser gemischt werden, wobei das Mischverhältnis steuerbar ist. Diese Alternative hat den Vorteil, dass keine aufwändige Sauerstoffanreicherungsvorrichtung benötigt wird, durch welche die Sauerstoffkonzentration des Schüttwassers präzise steuerbar ist, sondern dass einzig das Mischverhältnis des sauerstoffangereicherten Wassers mit dem restlichen Schüttwasser steuerbar sein muss. Dadurch wird die Vorrichtung zur Sauerstoffanreicherung einfacher und kostengünstiger.

Bevorzugt beträgt die auf eine Mehlmenge bezogene Menge an zusätzlicher Ascorbinsäure zwischen 5 ppm und 100 ppm. Vorzugsweise beträgt sie zwischen 10 ppm und 50 ppm. Der Vorteil davon ist, dass die Plastizität des Teigs erhöht und entsprechend besser optimierbar ist. Zudem wird dadurch der Geschmack des Endprodukts verbessert und die mögliche Lagerzeit des Endprodukts verlängert. Weiter kann die zusätzliche Ascorbinsäure bereits dem Mehl beigemischt werden, wodurch auch das Mehl länger haltbar wird. Es besteht aber auch die Möglichkeit, dass die Ascorbinsäure in der Form von einer oder mehreren ascorbinsäurehaltigen Zutaten vorgängig dem Mehl oder während des Knetprozesses dem Teig beigemischt werden.

Alternativ dazu besteht jedoch auch die Möglichkeit, die Menge an zusätzlicher Ascorbinsäure anders zu wählen oder gar keine Ascorbinsäure beizugeben.

Vorteilhafterweise wird das kontinuierliche Teigband mit mindestens einer Walzenanordnung mit einem Walzverhältnis von mindestens 10:1, vorzugsweise 20:1 oder mehr, ausgewalzt. Dadurch wird je nach Teigart zwar unter Umständen eine spezielle Walzenanordnung, wie beispielsweise eine Satellitenwalzenanordnung, erforderlich, aber es werden dafür nur wenige Walzvorgänge für die Herstellung des kontinuierlichen Teigbands benötigt. Dies erlaubt eine Verkürzung der Produktionsanlage sowie eine entsprechende Reduktion der Produktionszeit des kontinuierlichen Teigbands. Dadurch kann eine kostengünstigere Produktionsanlage verwendet werden und die Produktion des kontinuierlichen Teigbands wird insgesamt billiger.

Alternativ zur Verwendung von mindestens einer solchen Walzenanordnung besteht aber auch die Möglichkeit, Walzenanordnungen mit anderen Walzverhältnissen zu verwenden. Statt mit Walzen kann der Teig auch mit Pressen verarbeitet werden.

Bevorzugt wird das kontinuierliche Teigband mit mindestens einer Kalibrierwalzenvorrichtung mit einem Walzverhältnis von mehr als 2:1, insbesondere von 4:1 oder mehr ausgewalzt. Unter einer Kalibrierwalzenanordnung wird ein Walzenpaar verstanden, das die Dicke des Teigbands, welches zwischen den beiden Kalibrierwalzen hindurchgeführt wird, nicht stark verringert, aber dafür gleichmässig auf eine bestimmte Dicke auswalzt.

Dies hat den Vorteil, dass ein Teigband mit einer sehr gleichmässigen Dicke herstellbar ist, welches eine optimale Weiterverarbeitung erlaubt. So wird dadurch beispielsweise eine hohe Gewichtsgenauigkeit des Endprodukts erzielt.

Alternativ dazu kann aber auch auf die Verwendung einer solchen Kalibrierwalzenvorrichtung verzichtet werden. Falls ein Endprodukt produziert werden soll, welches nicht sehr hohe Anforderungen an die Gleichmässigkeit des Teigbands stellt, kann dies vorteilhafter sein, da dadurch die Produktionsanlage verkürzt werden kann und die Produktion somit kostengünstiger wird. Ebenso kann ein Verzicht auf eine solche Kalibrierwalzenvorrichtung je nach Platzangebot für die Produktionsanlage vorteilhaft sein.

Vorteilhafterweise sieht dementsprechend die Vorrichtung zur Herstellung des Teigbands zum Auswalzen der Teigmasse mindestens eine Walzenanordnung mit einem Walzverhältnis von mindestens 10:1 und/oder mindestens eine Kalibrierwalzenvorrichtung mit einem Walzverhältnis von mehr als 2:1 vor. Derartige Walzverhältnisse konnten bisher nicht eingesetzt werden wegen der nicht ausreichend hohen Plastizität des Teigs.

Vorzugsweise wird das kontinuierliche Teigband durch eine Zerteilvorrichtung fortlaufend in Teigstücke zerteilt. Dies hat den Vorteil, dass die Produktion von der Herstellung des kontinuierlichen Teigbands bis zu den Endprodukten, welche aus den Teigstücken hergestellt werden, fortlaufend durchführbar ist. Dies reduziert Leerlaufzeiten bei der Produktion, wodurch die Produktion als Gesamtes kostengünstiger wird.

Alternativ dazu kann das kontinuierliche Teigband aber auch nicht fortlaufend, sondern während Teigbandproduktionsunterbrüchen, in Teigstücke zerteilt werden. Dies kann vorteilhaft sein, wenn die Weiterverarbeitung der Teigstücke mehr Zeit in Anspruch nimmt und/oder nicht direkt am Fliessband durchführbar ist. In diesem Fall kann je nach vorhandenen weiterverarbeitenden Maschinen und/oder vorhandenen Arbeitskräften eine Unterbrechung der fortlaufenden Teigstückherstellung vorteilhaft sein.

Bevorzugt wird das kontinuierliche Teigband laminiert, indem es wiederholt geschichtet und zu seiner ursprünglichen Dicke ausgewalzt wird. Da für eine effiziente Produktion eines laminierten Teigbands eine optimale Plastizität des Teigbands essenziell ist, ermöglicht das Verfahren eine schnelle, kostengünstige Produktion. Es besteht dabei die Möglichkeit, dass das Teigband bei einem Schichtprozess zu mehr als 10, insbesondere 20 bis 30 Lagen schichtbar ist. Dies hat den Vorteil, dass weniger Schichtprozesse benötigt werden. Dementsprechend können die Produktionsanlage verkürzt und die Produktionskosten reduziert werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein Schema des Verfahrens zur Herstellung eines Teigs und zu dessen Bearbeitung,
- Fig. 2: ein Schema zur Sauerstoffanreicherung des Schüttwassers und
- Fig. 3: ein Schema des Verfahrens angewendet zur Herstellung eines Blätter- oder Plunderteigs.
Grundsätzlich sind in den Figuren gleiche Teile mit gleichen Bezugszeichen versehen.

### Wege zur Ausführung der Erfindung

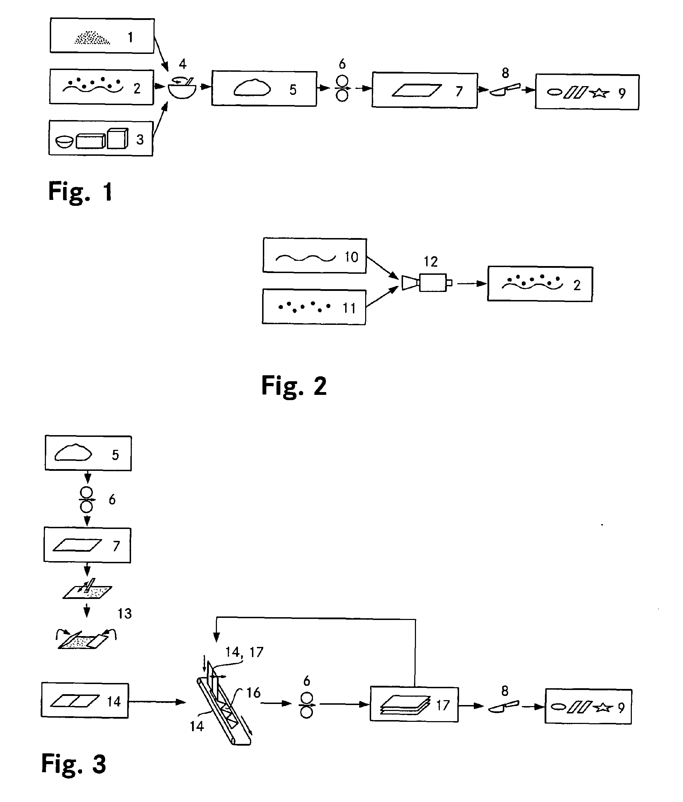

Figur 1 zeigt ein Schema des erfindungsgemässen Verfahrens zur Herstellung eines Teigs und zu dessen Bearbeitung. Es werden Mehl 1, mit Sauerstoff 11 angereichertes Schüttwasser 2 (siehe dazu auch Figur 2) und nach Bedarf weitere Zutaten 3 in einem Knetprozess 4 zu einer formbaren Teigmasse 5 verarbeitet. Zur Durchführung des Knetprozesses 4 kann eine bereits bekannte Vorrichtung verwendet werden. Spezifisch beim Verfahren ist jedoch, dass die Sauerstoffkonzentration des Schüttwassers 2 zwi schen 50 ppm und 500 ppm liegt. Die genaue Konzentration hängt von der verwendeten Vorrichtung und dem zu produzierenden Endprodukt ab. Sie ist derart optimiert, dass die formbare Teigmasse 5 eine grösstmögliche Plastizität aufweist. Dadurch wird die Weiterverarbeitung der Teigmasse 5 vereinfacht, weil die Teigmasse 5 nach einer Formgebung nicht mehr die ursprüngliche Form annimmt, sondern grösstenteils die gegebene Form behält. Diese Eigenschaft wird zur Herstellung eines Teigbands 7 genutzt, welches durch einen Walzprozess 6 aus der Teigmasse 5 geformt wird. Für den Walzprozess 6 können bereits bekannte Walzenvorrichtungen verwendet werden. Dank der erhöhten Plastizität des Teigs ist es dabei jedoch möglich, bei gleichmässiger Form des Teigbands 7 grössere Walzverhältnisse, d. h. Walzverhältnisse von 10:1 1 bis 20:1 zu erreichen. Dementsprechend werden weniger Walzvorgänge benötigt, um ein Teigband 7 mit einer gewünschten Dicke herzustellen. Um eine optimale Gleichmässigkeit des Teigbands 7 zu erreichen, ist es als letzter Schritt im Walzprozess 6 sinnvoll, die Dicke des Teigbands 7 mit einer Kalibrierwalzenanordnung zu kalibrieren, welche ein Walzverhältnis von 2:1 bis 4:1 aufweist. Dafür kann wiederum eine bereits bekannte Kalibrierwalzenanordnung verwendet werden. Das derart gefertigte Teigband 7 wird am Schluss des Verfahrens in einem Zerteilprozess 8 in einzelne Teigstücke 9 zerteilt, aus welchen die Endprodukte hergestellt werden. Dabei steht grundsätzlich frei, ob die einzelnen Teigstücke 9 durch eine bereits bekannte Stanz- oder Schneidvorrichtung erzeugt werden. Je nach zu produzierendem Endprodukt kann das eine oder das andere sinnvoller sein.

Je nach gewünschtem Endprodukt können verschiedene zusätzliche Zutaten 3 beim Knetprozess in die Teigmasse 5 gemischt werden. So besteht beispielsweise die Möglichkeit, Hefe oder ein anderes Backmittel beizumischen. Es besteht auch die Möglichkeit, zusätzlich Ascorbinsäure beizumischen. Letztere muss nicht unbedingt erst im Knetprozess 4 beigemischt werden, sondern kann bereits vorgängig dem Mehl 1 beigefügt werden. Dies hat den Vorteil, dass das Mehl 1 länger haltbar ist. Die Menge an beigemischter Ascorbinsäure ist erfindungsgemäss derart optimiert, dass eine grösstmögliche Plastizität des Teigs erreicht wird. Die auf eine Mehlmenge bezogene Menge an Ascorbinsäure liegt dabei zwischen 10 ppm und 50 ppm, in Ausnahmefällen ausserhalb dieses Bereichs. Die präzise Menge hängt sowohl von der verwendeten Vorrichtung, vom zu produzierenden Endprodukt, als auch von der Qualität des verwendeten Mehls 1 ab und muss von Fall zu Fall speziell optimiert werden.

Figur 2 zeigt ein Schema zur Sauerstoffanreicherung des Schüttwassers 2. Dazu wird Wasser 10 in einem Anreicherungsprozess 12 mit Sauerstoff 11 angereichert, bevor es als Schüttwasser 2 der Teigmasse 5 beim Knetprozess 4 beigemischt wird. Für diesen Anreicherungsprozess 12 kann ein bereits bekanntes Verfahren und eine bereits bekannte Vorrichtung verwendet werden, welche kommerziell erhältlich ist. Eine solche ist beispielsweise in der US 6,105,942 (KKB C2 Fluid Production GmbH) beschrieben.

Figur 3 zeigt ein Schema des erfindungsgemässen Verfahrens, welches aufgrund der hohen Plastizität der Teigmasse 5 besonders für die Herstellung eines Blätter- oder Plunderteigs geeignet ist. Dazu wird wie in der Figur 1 beschrieben eine Teigmasse 5 mit optimierter Plastizität hergestellt, aus welcher ein Teigband 7 geformt wird. Dieses Teigband 7 wird in einem weiteren Verarbeitungsschritt 13 mit Tourierfett bestrichen und eingeschlagen. Danach wird das eingeschlagene Teigband 14 vertikal hinunterhängend auf ein Rollband 15 geführt, welches parallel zu einer Breitseite des eingeschlagenen Teigbands 14 ausgerichtet ist und horizontal von einem Auftreffpunkt des eingeschlagenen Teigbands 14 wegläuft. Das eingeschlagene Teigband 14 wird während der Produktion vor und zurück bewegt, so dass auf dem laufenden Rollband 15 ein geschichtetes Teigband 16 vom Auftreffpunkt weggeführt wird. Dieses geschichtete Teigband 16 weist zehn oder mehr Lagen von mit Tourierfett bestrichenem und eingeschlagenem Teigband 14 auf. Es wird durch eine bereits bekannte Walzenanordnung in einem Walzprozess 6 wieder auf die Dicke des Teigbands 7 gewalzt, so dass ein dünnes, geschichtetes Teigband 17 entsteht. Dieser Schichtungsprozess wird zwei- bis dreimal wiederholt, wodurch das dünne, geschichtete Teigband 17 am Ende bis zu mehreren hundert Lagen des ursprünglichen, mit Tourierfett bestrichenen und eingeschlagenen Teigbands 14 aufweist. Dann wird das dünne, geschichtete Teigband 17 im Zerteilprozess 8 in Teigstücke 9 geschnitten oder gestanzt. Diese Teigstücke 9 können zu den gewünschten Endprodukten verarbeitet werden.

Zur Durchführung dieses Verfahrens zur Herstellung von Blätter- und Plunderteig kann wiederum eine bereits bekannte Vorrichtung mit bereits bekannten Walzenanordnungen verwendet werden. So können z.B. Maschinen, wie sie aus den in der Beschreibungseinleitung zitierten Druckschriften ersichtlich sind, zur Herstellung des Teigbandes eingesetzt werden, wobei die Abwandlung darin besteht, dass die Walzverhältnisse deutlich grösser sein können als sie bei den bekannten Maschinen eingesetzt oder sogar vorgeschrieben wurden. Aufgrund der erhöhten Plastizität des Teigs besteht also die Möglichkeit, dass weniger Walzenanordnungen als bis anhin benötigt werden. Eine entsprechende Vorrichtung ist für einen Fachmann ohne weiteres aus dem bereits bekannten Stand der Technik herstellbar.

Zusammenfassend ist festzustellen, dass durch die Erfindung ein Verfahren geschaffen wird, welches die Herstellung und die Bearbeitung eines Teigs wirtschaftlich und qualitätsmässig optimiert.

## Patentansprüche

1. Verfahren zur Herstellung eines Teigs und zu dessen Bearbeitung, wobei im Rahmen eines Knetprozesses
- Mehl,
- Schüttwasser,
- Sauerstoff und
- nach Bedarf weitere Zutaten
zu einem formbaren Teig verarbeitet werden, **dadurch gekennzeichnet, dass** nach dem Knetprozess der Teig zu einem Teigband ausgewalzt wird, wobei beim Auswalzen eine durch den im Knetprozess zugegebenen Sauerstoff bedingte Zunahme einer Plastizität des Teigs zur schnelleren Teigbandherstellung genutzt wird.

2. Verfahren nach Anspruch 1, **dadurch gekennzeichnet, dass** der Sauerstoff durch mit Sauerstoff angereichertes Schüttwasser dem Teig im Knetprozess zugeführt wird.

3. Verfahren nach Anspruch 1, **dadurch gekennzeichnet, dass** im Rahmen des Knetprozesses zusätzlich Ascorbinsäure verarbeitet wird, wobei der Sauerstoff und die Ascorbinsäure in einer Menge zugegeben werden, welche die Plastizität des Teigs erhöht.

4. Verfahren nach einem der Ansprüche 1 bis 3, **dadurch gekennzeichnet, dass** durch Übereinanderschichten von Teig-Fett-Teig-Bändern oder Teig-Bändern laminierte Teige hergestellt werden.

5. Verfahren nach einem der Ansprüche 1 bis 4, **dadurch gekennzeichnet, dass** Feinteige und Pizzateige hergestellt werden.

6. Verfahren nach einem der Ansprüche 1 bis 5, **dadurch gekennzeichnet, dass** die Teigmasse frei von Sauerteig ist.

7. Verfahren nach einem der Ansprüche 2 bis 6, **dadurch gekennzeichnet, dass** das Schüttwasser einen Sauerstoffgehalt von mindestens 100 ppm, vorzugsweise mindestens 150 ppm, mindestens 200 ppm, mindestens 250 ppm, insbesondere mindestens 300 ppm und vorzugsweise nicht mehr als 1000 ppm, insbesondere nicht mehr als 500 ppm, aufweist.

8. Verfahren nach einem der Ansprüche 1 bis 7, **dadurch gekennzeichnet, dass** die auf eine Mehlmenge bezogene Menge an zusätzlicher Ascorbinsäure zwischen 5 ppm und 100 ppm, vorzugsweise zwischen 10 ppm und 50 ppm, beträgt.

9. Verfahren nach einem der Ansprüche 1 bis 8, **dadurch gekennzeichnet, dass** das kontinuierliche Teigband mit mindestens einer Walzenanordnung mit einem Walzverhältnis von mindestens 10:1, vorzugsweise 20:1 oder mehr, ausgewalzt wird.

10. Verfahren nach einem der Ansprüche 1 bis 9, **dadurch gekennzeichnet, dass** das kontinuierliche Teigband mit mindestens einer Kalibrierwalzenvorrichtung mit einem Walzverhältnis von mehr als 2:1, von maximal 4:1 oder mehr ausgewalzt wird.

11. Verfahren nach einem der Ansprüche 1 bis 10, **dadurch gekennzeichnet, dass** das kontinuierliche Teigband laminiert wird, indem es wiederholt geschichtet und wieder zu seiner ursprünglichen Dicke ausgewalzt wird.

12. Verfahren nach einem der Ansprüche 1 bis 11, **dadurch gekennzeichnet, dass** das kontinuierliche Teigband durch eine Zerteilvorrichtung fortlaufend in Teigstücke zerteilt wird.

13. Vorrichtung zur Durchführung des Verfahrens nach einem der Ansprüche 1 bis 12, umfassend eine Knetmaschine und eine Schüttwasserdosiervorrichtung **dadurch gekennzeichnet, dass** eine Mess- und/oder Steuervorrichtung zur Kontrolle der Dosierung der Sauerstoffanreicherung im Schüttwasser vorgesehen ist.

14. Vorrichtung nach Anspruch 13, **dadurch gekennzeichnet, dass** zum Auswalzen der Teigmasse mindestens eine Walzenanordnung mit einem Walzverhältnis von mindestens 10:1 und/oder mindestens eine Kalibrierwalzenvorrichtung mit einem Walzverhältnis von mehr als 2:1 vorgesehen ist.
